# EUROPÄISCHE PATENTSCHRIFT

(11) **EP 3 368 261 B1**
(45) Veröffentlichungstag und Bekanntmachung des Hinweises auf die Patenterteilung: **28.09.2022**
(21) Anmeldenummer: 16751304.3
(22) Anmeldetag: 16.08.2016
(51) Int. Cl.: B29C 33/44, B29C 33/48, B29C 53/82, B29C 53/58, B29C 70/32, B29C 70/48, B29C 70/56

(54) **KERNSYSTEM, VERWENDUNG DES KERNSYSTEMS BEI DER HERSTELLUNG EINES FASERVERBUNDBAUTEILS SOWIE VERFAHREN ZUR HERSTELLUNG EINES FASERVERBUNDBAUTEILS**
CORE SYSTEM, USE OF THE CORE SYSTEM IN THE PRODUCTION OF A FIBER COMPOSITE COMPONENT AND METHOD FOR PRODUCING A FIBER COMPOSITE COMPONENT
SYSTÈME DE NOYAU, UTILISATION DU SYSTÈME DE NOYAU DANS LA FABRICATION D'UN ÉLÉMENT COMPOSITE RENFORCÉ PAR FIBRES ET PROCÉDÉ DE FABRICATION D'UN ÉLÉMENT COMPOSITE RENFORCÉ PAR FIBRES

(30) Priorität: 29.10.2015 DE 102015221182
(43) Veröffentlichungstag der Anmeldung: 05.09.2018
(73) Patentinhaber: Bayerische Motoren Werke Aktiengesellschaft, 80809 München (DE)
(72) Erfinder: EISCH, Christoph, 80939 München (DE); SPIRKL, Florian, 84155 Bodenkirchen (DE)
(86) Internationale Anmeldenummer: PCT/EP2016/069369
(87) Internationale Veröffentlichungsnummer: WO 2017/071852

(56) Entgegenhaltungen:
- EP-A2- 0 206 268
- DE-A1- 3 125 813
- DE-A1- 3 516 420
- DE-A1- 10 044 626
- DE-A1-102012 000 564
- DE-C1- 3 911 312
- US-A- 4 541 605
- Anonymous: "Faserverbundwerkstoff - Wikipedia", , 25. September 2015 (2015-09-25), Seiten 1-12, XP055325087, Gefunden im Internet: URL:https://web.archive.org/web/2015092502 1925/https://de.wikipedia.org/wiki/Faserve rbundwerkstoff [gefunden am 2016-12-01]

## Beschreibung

Die Erfindung betrifft ein Kernsystem für die Herstellung eines Faserverbundbauteils, die Verwendung des Kernsystems als Kern sowie ein Verfahren zur Herstellung eines Faserverbundbauteils.

Faserverbundbauteile werden aufgrund ihrer hohen Stabilität bei geringem Gewicht immer häufiger eingesetzt, beispielsweise in der Automobilindustrie. Die Faserverbundbauteile können auf unterschiedliche Weise hergestellt werden. Ein Typ von Verfahren sind Pressverfahren. Die bekannten Pressverfahren umfassen unter anderem ein sogenanntes Spritzpressverfahren, bei dem ein matrixbildendes Material des Faserverbundbauteils, das auch Formmasse genannt wird, in eine Kavität eines Werkzeugs eingespritzt wird und dort unter Druck und Wärme aushärtet.

Mit dem Spritzpressen, das auch als "Resin Transfer Moulding" (RTM) bezeichnet wird, werden unter anderem CFK-Flecht-Hohlprofile hergestellt. Hierbei wird in das Werkzeug, insbesondere die Kavität des Werkzeugs, zunächst ein Flechtkern eingelegt, der anschließend vom matrixbildenden Material umgeben wird. Der Flechtkern wird vorab dadurch erzeugt, dass ein Kern mit Fasern umflochten wird, die anschließend Teil des CFK-Flecht-Hohlprofils sind. Nach der Herstellung des Faserverbundbauteils muss der Kern entfernt werden.

Im Stand der Technik wird die Entnahme des Kerns dadurch ermöglicht, dass am Kern mindestens eine Entformungsschräge vorgesehen ist, über die der Kern aus dem hergestellten Faserverbundbauteil entnommen werden kann. Aufgrund der Entformungsschräge ist es allerdings nicht möglich, Faserverbundteile herzustellen, die symmetrisch mit gleichbleibenden Flächen oder gleichbleibenden Querschnitt ausgebildet sind, da die Entformungsschräge eine Abschrägung zumindest einer Fläche des hergestellten Faserverbundbauteils zur Folge hat.

Alternativ ist aus dem Stand der Technik bekannt, dass ein expandierender Kern verwendet wird, der aus einem flexiblen Material hergestellt ist. Der Kern wird zur Herstellung des Flechtkerns expandiert und nach der Herstellung des Faserverbundbauteils wieder entlüftet, so dass er in seine Ausgangsstellung zurückkehrt und in einfacher Weise aus dem Faserverbundbauteil entnommen werden kann. Bei flexiblen, expandierenden Kernen hat sich jedoch als Nachteil herausgestellt, dass diese dem beim Spritzpressen auftretenden Druck nicht genügend Widerstand entgegenbringen können, wodurch die hergestellten Faserverbundbauteile eine ungleichmäßige Wandstärke haben.

Die DE 100 44 626 A1 betrifft einen Kern für ein Spritzgußwerkzeug zur Herstellung langer zylindrischer Kanäle. Der Kern ist mehrteilig ausgebildet, wobei durch Verschieben in axialer Richtung wenigstens eines der Kernteile gegenüber den anderen Kernteilen die Querschnittsfläche des Kerns reduzierbar ist.

Die EP 0 206 268 A2 offenbart einen Wickeldorn zum Herstellen von Rohkörpern aus harzgetränkten Fasersträngen mit einem zentralen Kern und einer in ihrem Durchmesser veränderbaren Dornhülse, die aus paarweise baugleichen und diametral gegenüberliegenden Schalensegmenten besteht.

Die DE 39 11 312 C1 offenbart einen Formkern zum Wickeln eines faserverstärkten Kunststoffkörpers. Der Formkern umfasst ein Kerngerüst und eine Kernhülle, die einen biegsamen Mantel des Kerngerüstes bildet.

Die DE 10 2012 000 564 A1 betrifft ein Urformwerkzeug für die Fertigung eines aus Faserverstärktem Kunststoff bestehenden aerodynamische geformten Luftfahrzeugbauteils mit einem mehrteiligen Werkzeugkern.

Die DE 35 16 420 A1 offenbart ein Verfahren zum Herstellen eines Verbundbauteils, bei dem Anpassmatrizen oder -formen verwendet werden, um eine teilweise hohle Faser/Grundmaterialauflage zusammenzupressen.

Die Aufgabe der Erfindung ist es, ein Kernsystem zur Herstellung eines Faserverbundbauteils bereitzustellen, mit dem es möglich ist, Bauteile mit einer gleichmäßigen Wandstärke und/oder konstantem Querschnitt in einfacher Weise herstellen zu können.

Die Aufgabe wird erfindungsgemäß durch ein Kernsystem mit einem im Wesentlichen rechteckigen Querschnitt für die Herstellung eines Faserverbundbauteils gemäß Anspruch 1 gelöst.

Das Hauptkernelement weist demnach ebenfalls eine Außenfläche auf, die Teil der gesamten Mantelfläche ist.

Das zuvor beschriebene Kernsystem kann insbesondere als Kern bei der Herstellung des Faserverbundbauteils verwendet werden.

Ferner wird die Aufgabe durch ein Verfahren gemäß Anspruch 6 gelöst, bei dem ein Kernsystem mit wenigstens zwei Kernelementen, die miteinander gekoppelt und relativ zueinander verschiebbar sind, wobei zumindest ein Kernelement eine zu einer Verschieberichtung schräge Fläche hat, verwendet wird. Hierbei wird ein Kernelement in Bezug auf ein anderes Kernelement in eine Verschieberichtung verschoben. Anschließend wird das Kernsystem mit Fasern umflochten. Das umflochtene Kernsystem wird daraufhin mit einem matrixbildenden Material des Faserverbundbauteils umgeben. Das matrixbildende Material wird anschließend ausgehärtet. Abschließend wird das Kernsystem entfernt. Die Kernelemente werden während des Einbringens eines matrixbildenden Materials und/oder Aushärtens des matrixbildenden Materials zueinander verschoben.

Durch das Verschieben der Kernelemente zueinander während des Einbringens eines matrixbildenden Materials und/oder Aushärtens des matrixbildenden Materials kann der Umfang des gesamten Kernsystems vergrößert werden, um beispielsweise während der Herstellung des Faserverbundbauteils Einfluss auf die Wandstärke und/oder den Faservolumengehalt zu nehmen. Beispielsweise kann eine Nachverdichtung des Geflechts während des RTM-Prozesses erfolgen.

Der Grundgedanke der Erfindung besteht darin, dass der Umfang bzw. die Abmessungen des Kernsystems einstellbar ist bzw. sind, indem das wenigstens eine Kernelement, das eine zur Verschieberichtung schräge Fläche hat, verschoben wird. Das entlang der Verschieberichtung bewegte Kernelement weist vorzugsweise die schräge Fläche auf, über die das Kernelement verschoben wird, wodurch sich eine entsprechende Veränderung des Umfangs bzw. der Abmessungen des gesamten Kernsystems ergibt. Beispielsweise ist es hierdurch möglich, den Kern nach der Herstellung des Faserverbundbauteils in einfacher Weise zu entnehmen, indem der Umfang des Kernsystems verringert wird. Je nach Anordnung der schrägen Fläche ist gewährleistet, dass das mit dem Kernsystem hergestellte Bauteil eine konstante Wandstärke und/oder einen konstanten Querschnitt hat.

Ferner lässt sich die Wandstärke der hergestellten Faserverbundbauteile über das Kernsystem bzw. den Kern einstellen, insbesondere über die eingestellten Abmessungen. Zudem kann der Faservolumengehalt des hergestellten Faserverbundbauteils mit dem variablen Kernsystem eingestellt werden.

Des Weiteren ist das Kernsystem wiederverwendbar, da es sich zerstörungsfrei aus dem herstellten Faserverbundbauteil entnehmen lässt.

Ein Aspekt sieht vor, dass wenigstens ein Kernelement einen sich im Wesentlichen verringernden Querschnitt aufweist. Beispielsweise ist das Kernelement keilförmig ausgebildet, wodurch das Kernelement automatisch eine zur Verschieberichtung schräge Fläche hat.

Das Hauptkernelement kann als Anlageelement für weitere Kernelemente dienen, die eine zur Verschieberichtung schräge Fläche haben. Über die mehreren Kernelemente mit schräger Fläche ist es möglich, ein Kernsystem auszubilden, das einen im Wesentlichen rechteckigen Querschnitt hat, dessen Querschnittsfläche über das Verschieben der Kernelemente veränderbar ist.

Sofern mehrere Kernelemente vorgesehen sind, die eine schräge Fläche aufweisen, so können diese Kernelemente relativ zum Hauptkernelement und/oder relativ zueinander entlang der Verschieberichtung verschoben werden.

Die Kontaktfläche und die Außenfläche wenigstens eines Kernelements können schräg zueinander verlaufen. Hierdurch ist in einfacher Weise ein Kernelement ausgebildet, das eine zur Verschieberichtung schräge Fläche hat. Die Außenfläche kann dabei parallel zur Verschieberichtung ausgebildet sein. Beispielsweise ist dieses Kernelement keilförmig ausgebildet.

Ein weiterer Aspekt sieht vor, dass die Kernelemente aus einem mechanisch stabilen Material ausgebildet sind, insbesondere aus einem Metall. Hierdurch ist sichergestellt, dass die Kernelemente dem hohen Druck während der Herstellung des Faserverbundbauteils beim Spritzpressen standhalten. Darüber hinaus können die Kernelemente zum Beheizen verwendet werden, sofern sie aus einem wärmeleitenden und/oder elektrisch leitfähigen Material sind.

Ferner kann vorgesehen sein, dass die Kernelemente vor dem Entfernen des Kernsystems zueinander verschoben werden. Hierdurch ist es möglich, dass der Durchmesser des gesamten Kernsystems verringert wird, bevor das Kernsystem aus dem hergestellten Faserverbundbauteil entfernt wird, wodurch sich die Entnahme erleichtert.

Ein weiterer Aspekt sieht vor, dass wenigstens ein Kernelement beheizt wird. Hierdurch kann das herzustellende Faserverbundbauteil während seiner Herstellung von innen beheizt werden, wodurch das Faserverbundbauteil schneller aushärtet. Das Kernelement kann wärmeleitend und/oder selbstheizend ausgebildet sein. Beispielsweise kann die Beheizung durch zumindest eine Bohrung in wenigstens einem Kernelement realisiert sein, durch das ein warmes Fluid strömt, beispielsweise Wasser.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 ein erfindungsgemäßes Kernsystem in einer ersten Position und
- Figur 2 das erfindungsgemäße Kernsystem aus Figur 1 in einer zweiten Position

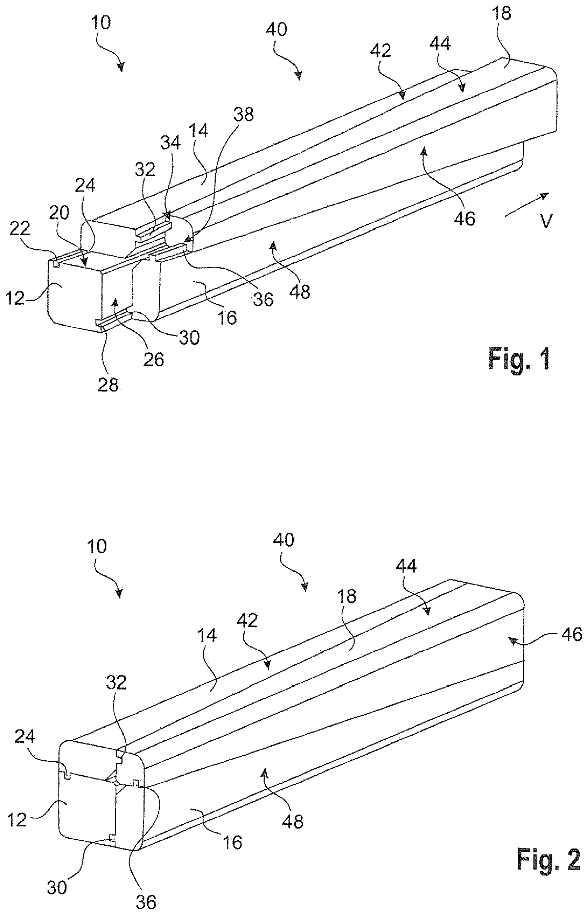

In Figur 1 ist ein Kernsystem 10 für die Herstellung eines Faserverbundbauteils gezeigt. In der gezeigten Ausführungsform weist das Kernsystem 10 vier Kernelemente 12, 14, 16, 18 auf, die relativ zueinander verschiebbar sind.

Das erste Kernelement 12 kann auch als Hauptkernelement bezeichnet werden. Das zweite Kernelement 14 und das dritte Kernelement 16 sind jeweils verschiebbar zum Hauptkernelement 12 angeordnet.

Hierzu weist das Hauptkernelement 12 eine Kontaktfläche 20 mit einer daran vorgesehenen Nut 22 auf, in die ein entsprechender Vorsprung 24 des zweiten Kernelements 14 eingreift, sodass das zweite Kernelement 14 entlang einer Verschieberichtung V geführt verschoben werden kann.

Das Hauptkernelement 12 weist ferner eine zweite Kontaktfläche 26 auf, an der eine zweite Nut 28 ausgebildet ist, in die ein Vorsprung 30 des dritten Kernelements 16 eingreift. Das dritte Kernelement 16 kann ebenfalls geführt entlang der Verschieberichtung V in Bezug auf das Hauptkernelement 12 verschoben werden.

Das zweite Kernelement 14 und das dritte Kernelement 16 liegen dementsprechend über ihre Kontaktflächen an den jeweiligen Kontaktflächen 20, 26 des Hauptkernelements 12 an.

Das zweite Kernelement 14 weist zudem in der gezeigten Ausführungsform einen dritten Vorsprung 32 auf, der in eine Nut 34 eingreift, die an einer Kontaktfläche des vierten Kontaktelements 18 ausgebildet ist.

Das dritte Kontaktelement 16 weist einen vierten Vorsprung 36 auf, der in eine Nut 38 eingreift, die ebenfalls im vierten Kontaktelement 18 ausgebildet ist.

Hierdurch ist es möglich, dass das vierte Kontaktelement 18 entlang der Verschieberichtung V relativ zum zweiten und dritten Kontaktelement 14, 16 verschoben werden kann. Das Kontaktelement 18 ist dabei über die Nuten 34, 38 sowie die an den Kontaktelementen 14, 16 vorgesehenen Vorsprünge 32, 36 geführt.

Die vier Kernelemente 12 bis 18 liegen somit jeweils über zwei Kontaktflächen an einem benachbarten Kernelement 12 bis 18 an, wobei die Kernelemente 12 bis 18 jeweils Außenflächen aufweisen, die Teile einer Mantelfläche 40 des gesamten Kernsystems 10 sind.

Von den die Mantelfläche 40 bildenden Außenflächen sind in Figur 1 lediglich die Außenflächen 42 des zweiten Kernelements 14, die Außenfläche 44 und 46 des vierten Kernelements 18 sowie die Außenfläche 48 des dritten Kernelements 16 zu sehen. Auf den gegenüberliegenden Seiten sind entsprechend weitere Außenflächen.

Die Kernelemente 14 bis 18 weisen ferner wenigstens eine Fläche auf, die schräg in Bezug auf die Verschieberichtung V ist.

In der gezeigten Ausführungsform handelt es sich hierbei um die jeweiligen Kontaktflächen zwischen dem zweiten Kernelement 14 und dem vierten Kernelement 18 sowie den Kontaktflächen zwischen dem dritten Kernelement 16 und dem vierten Kernelement 18. Diese Kontaktflächen der Kernelemente 14 bis 18 verlaufen zudem schräg in Bezug auf die jeweiligen Außenflächen dieser Kernelemente 14 bis 18, die parallel zur Verschieberichtung V verlaufen.

Aufgrund der schräg verlaufenden Flächen, also der Kontaktflächen, kann der Umfang bzw. die Abmessungen des gesamten Kernsystems 10 verändert werden. Die Kernelemente 14 bis 18 werden hierzu in Bezug auf das Hauptkernelement 12 oder relativ zueinander entlang der Verschieberichtung V oder entgegen der Verschieberichtung V verschoben.

Dies geht unter anderem aus einem Vergleich der Figuren 1 und 2 hervor, da die Kernelemente 14 bis 18 in Figur 2 in ihrer Endposition gezeigt sind, in der der Umfang des Kernsystems 10 maximal ist.

Das Hauptkernelement 12 weist in der gezeigten Ausführungsform einen im Wesentlichen rechteckigen Querschnitt auf, wohingegen die weiteren Kernelemente 14 bis 18 einen sich im Wesentlichen verringernden Querschnitt haben. Dies bedeutet, dass der Querschnitt der Kernelemente 14 bis 18 an einem ersten Ende kleiner als an einem dem ersten Ende gegenüberliegenden Ende ist. Dies ist in Figur 1 besonders anschaulich am vierten Kernelement 18 zu sehen.

Die Kernelemente 14 bis 18 können im Wesentlichen keilförmig ausgebildet sein.

In der gezeigten Ausführungsform sind das zweite und das dritte Kernelement 14, 16 spiegelverkehrt ausgebildet und bilden eine zusammenhängende Baugruppe des Kernsystems 10 aus, da sie gemeinsamen in Bezug auf das Hauptkernelement 12 verschoben werden. Dies geht auch aus der Figur 1 hervor, da das zweite und das dritte Kernelement 14, 16 um die gleiche Strecke relativ zum Hauptkernelement 12 verschoben sind.

Das vierte Kernelement 18 wird dagegen in der gezeigten Ausführungsform um die doppelte Strecke verschoben, also doppelt so weit wie das zweite und dritte Kernelement 14, 16.

Generell hängt die Übersetzung, also das Verhältnis der Verstellstrecke des vierten Kernelements 18 im Vergleich zu den Strecken des zweiten und dritten Kernelements 14, 16 vom Winkel der schrägen Flächen ab, die diese zur Verstellrichtung V haben.

Da sämtliche Außenflächen der Kernelemente 12 bis 18 parallel zur Verschieberichtung V verlaufen, ergibt sich ein im Wesentlichen rechteckiger Querschnitt des Kernsystems 10, wobei die Mantelfläche 40 kontinuierlich ist, das heißt ohne Sprünge. Die exakte Querschnittsfläche des Kernsystems 10 ist einstellbar, indem die Kernelemente 12 bis 18 zueinander verschoben werden, da die Kernelemente 14 bis 18 jeweils über schräge Flächen aneinander anliegen, also über ihre Kontaktflächen, die schräg ausgebildet sind. Hierbei ändert sich die kontinuierlich ausgebildete Mantelfläche 40 zumindest im Arbeitsbereich nicht, wie aus einem Vergleich der Figuren 1 und 2 hervorgeht.

Die Kernelemente 12 bis 18 sind vorzugsweise aus einem festen Material ausgebildet, insbesondere einem Metall. Aufgrund des festen Materials ist gewährleistet, dass die Kernelemente 12 bis 18 den während des Herstellungsverfahrens auftretenden Drücken standhalten können.

Demnach sind die Kernelemente 12 bis 18 zudem wärmeleitend, sodass sie zum Beheizen des Faserverbundbauteils während der Herstellung dienen können. Hierzu können die Kernelemente 12 bis 18 mit einer Wärmequelle verbunden werden, beispielsweise einer Wärmeübertragungsflüssigkeit, die durch die Kernelemente geleitet wird, so dass die an die Kernelemente abgegebene Wärme von den Kernelementen 12 bis 18 weitergeleitet wird.

Alternativ oder ergänzend können die Kernelemente 12 bis 18 selbst mit einer Wärmequelle versehen sein. Hierzu sind beispielsweise Heizdrähte in den Kernelementen 12 bis 18 vorgesehen, die von einer Steuerung eines Werkzeugs angesteuert werden.

Nachfolgend wird das Herstellungsverfahren des Faserverbundbauteils beschrieben, das sich mithilfe des zuvor beschriebenen Kernsystems 10 in einfacher Weise herstellen lässt.

In Figur 1 ist das Kernsystem 10 in einer sogenannten Flechtposition dargestellt, in der der Umfang des Kernsystems 10 bzw. dessen Abmessungen im Vergleich zu der in Figur 2 gezeigten Endposition zunächst verringert sind. Die Flechtposition kann als eine Arbeitsposition des Kernsystems 10 angesehen werden. Das Kernsystem 10 wird in dieser in Figur 1 gezeigten Flechtposition mit den Fasern umflochten, die Teil des Faserverbundbauteils werden sollen.

Hierbei können Glasfasern, Kohlenstofffasern, Keramikfasern, Aramidfasern, Naturfasern, Nylonfasern oder sonstige Fasern verwendet werden.

Anschließend wird das umflochtene Kernsystem 10 in ein Werkzeug eingelegt, in dem die geflochtenen Fasern von einem matrixbildenden Material imprägniert bzw. getränkt werden. Bei dem matrixbildenden Material kann es sich m einen Kunststoff handeln, beispielsweise einem Duromer, einem Elastomer oder einem Thermoplast.

Bei einem RTM-Spritzpressverfahren wird das matrixbildende Material in eine Kavität des Werkzeugs unter hohem Druck eingespritzt. In die Kavität ist das umflochtene Kernsystem 10 zuvor eingelegt worden.

Nachdem die geflochtenen Fasern vom matrixbildenden Material imprägniert bzw. getränkt worden sind, härtet das matrixbildende Material aus, wodurch das Faserverbundbauteil hergestellt ist.

Sofern zumindest eines der Kernelemente 12 bis 18 beheizbar und/oder wärmeleitend ausgebildet ist, kann das Aushärten des matrixbildenden Materials beschleunigt werden.

Abschließend wird das Kernsystem 10 aus dem hergestellten Faserverbundbauteil entfernt. Das Kernsystem 10 kann anschließend für die Herstellung eines anderen Faserverbundbauteils wiederverwendet werden. Hierzu ist es wichtig, dass sich das Kernsystem 10 in einfacher Weise und zerstörungsfrei aus dem hergestellten Faserverbundbauteil entnehmen lässt.

Das variable Kernsystem 10 kann vor der Entnahme aus der Flechtposition, die eine Arbeitsstellung darstellt, in eine Entnahmestellung verschoben werden, in der der Umfang des Kernsystems 10 weiter verringert ist, sodass es leichter entnehmbar ist. Hierzu werden die Kernelemente 14 bis 18 zum Hauptkernelement 12 und/oder zueinander in Verschieberichtung V verschoben.

Ferner kann vorgesehen sein, dass das Kernsystem 10 während des Aushärtens des matrixbildenden Materials bzw. während dessen Einbringung in die Kavität des Werkzeugs entgegen der Verschieberichtung V verschoben wird, wodurch sich der Umfang des Kernsystems 10 vergrößert. Hierdurch kann der Faservolumengehalt während des RTM-Prozesses verändert werden, was einem Nachverdichten des um das Kernsystem 10 gebildeten Geflechts entspricht. Das Kernsystem 10 wird demnach expandiert, sodass die Fasern nachverdichtet werden können. Auch diese Stellung kann als eine Arbeitsposition angesehen werden, die das Kernsystem 10 vor der Entnahme einnimmt.

Die Variabilität des Kernsystems 10 ermöglicht es generell, die Wandstärke sowie den Faservolumengehalt des herzustellenden Faserverbundbauteils noch während der Herstellung über das Kernsystem 10 einzustellen.

Da die Kernelemente 12 bis 18 aus einem festen Material, beispielsweise einem Metall, ausgebildet sind, ist zudem sichergestellt, dass eine hohe Reproduzierbarkeit sowie enge Toleranzen hinsichtlich der Wandstärke des Faserverbundbauteils erreicht werden können.

Aufgrund des Kernsystems 10 ist es ferner möglich, symmetrische Faserverbundbauteile herzustellen, deren Wandstärke über die Länge der Wand gleichbleibend ist.

Allgemein ist ein Kernsystem 10 geschaffen, mit dem ein Faserverbundbauteil in einfacher Weise hergestellt werden kann, das eine symmetrische Form sowie eine gleichmäßige Wandstärke aufweist.

## Patentansprüche

1. Kernsystem (10) mit einem im Wesentlichen rechteckigen Querschnitt für die Herstellung eines Faserverbundbauteils, mit vier Kernelementen (12, 14, 16, 18), die miteinander gekoppelt und relativ zueinander verschiebbar sind, wobei eines der vier Kernelemente (12) als Hauptkernelement ausgebildet ist, das einen im Wesentlichen rechteckigen Querschnitt hat, und wobei die weiteren Kernelemente (14, 16, 18) eine zu einer Verschieberichtung (V) schräge Fläche haben, wobei die vier Kernelemente (12, 14, 16, 18) jeweils wenigstens eine Außenfläche (42, 44, 46, 48) aufweisen, die Teil einer Mantelfläche (40) des gesamten Kernsystems (10) ist, wobei die vier Kernelemente (12, 14, 16, 18) jeweils über zwei Kontaktflächen an einem benachbarten Kernelement (12, 14, 16, 18) anliegen, wobei über das Verschieben der Kernelemente die Querschnittsfläche des Kernsystems veränderbar ist.

2. Kernsystem (10) nach Anspruch 1, **dadurch gekennzeichnet, dass** wenigstens ein Kernelement (14, 16, 18) einen sich im Wesentlichen verringernden Querschnitt aufweist.

3. Kernsystem (10) nach Anspruch 1 oder 2, **dadurch gekennzeichnet, dass** die Kontaktfläche und die Außenfläche (42, 44, 46, 48) wenigstens eines Kernelements (14, 16,18) schräg zueinander verlaufen.

4. Kernsystem (10) nach einem der vorhergehenden Ansprüche, **dadurch gekennzeichnet, dass** die Kernelemente (12, 14, 16, 18) aus einem festen Material ausgebildet sind, insbesondere aus einem Metall.

5. Verwendung des Kernsystems (10) nach einem der vorhergehenden Ansprüche als Kern bei der Herstellung eines Faserverbundbauteils.

6. Verfahren zur Herstellung eines Faserverbundbauteils, mit einem Kernsystem (10) mit wenigstens zwei Kernelementen (12, 14, 16, 18), die miteinander gekoppelt und relativ zueinander verschiebbar sind, wobei zumindest ein Kernelement (14, 16, 18) eine zu einer Verschieberichtung (V) schräge Fläche hat, mit den folgenden Schritten:
a) Verschieben eines Kernelements (12, 14, 16, 18) in Bezug auf ein anderes Kernelement (12, 14, 16, 18) entlang einer Verschieberichtung (V),
b) Umflechten des Kernsystems (10) mit Fasern,
c) Einbringen eines matrixbildenden Materials,
d) Aushärten des matrixbildenden Materials, und
e) Entfernen des Kernsystems (10)
wobei die Kernelemente (12, 14, 16, 18) während des Schritts c) und/oder des Schritts d) zueinander verschoben werden.

7. Verfahren nach Anspruch 6, **dadurch gekennzeichnet, dass** die Kernelemente vor dem Schritt e) zueinander verschoben werden.

8. Verfahren nach einem der Ansprüche 6 bis 7, **dadurch gekennzeichnet, dass** wenigstens ein Kernelement beheizt wird.

## Claims

1. Core system (10), having a substantially rectangular cross section, for the production of a fibre composite component, having four core elements (12, 14, 16, 18) which are coupled to one another and are displaceable relative to one another, wherein one of the four core elements (12) is configured as a main core element which has a substantially rectangular cross section, and wherein the further core elements (14, 16, 18) have a face that is oblique to a displacement direction (V), wherein the four core elements (12, 14, 16, 18) each have at least one external face (42, 44, 46, 48) which is part of a shell face (40) of the entire core system (10), wherein the four core elements (12, 14, 16, 18) each by way of two contact faces bear on a neighbouring core element (12, 14, 16, 18), wherein the cross-sectional area of the core system is variable by the displacement of the core elements.

2. Core system (10) according to Claim 1, **characterized in that** at least one core element (14, 16, 18) has a substantially decreasing cross section.

3. Core system (10) according to Claim 1 or 2, **characterized in that** the contact face and the external face (42, 44, 46, 48) of at least one core element (14, 16, 18) run in a mutually oblique manner.

4. Core system (1) according to one of the preceding claims, **characterized in that** the core elements (12, 14, 16, 18) are configured from a hard material, in particular from a metal.

5. Use of the core system (10) according to one of the preceding claims as a core in the production of a fibre composite component.

6. Method for producing a fibre composite component, having a core system (10) having at least two core elements (12, 14, 16, 18) which are coupled to one another and displaceable relative to one another, wherein at least one core element (14, 16, 18) has a face that is oblique to a displacement direction (V), said method comprising the following steps:
a) displacing one core element (12, 14, 16, 18) in relation to another core element (12, 14, 16, 18) along a displacement direction (V);
b) circumferentially braiding the core system (10) with fibres;
c) incorporating a matrix-forming material; and
d) removing the core system (10);
wherein the core elements (12, 14, 16, 18) are mutually displaced during step c) and/or step d).

7. Method according to Claim 6, **characterized in that** the core elements prior to step e) are displaced in relation to one another.

8. Method according to one of Claims 6 to 7, **characterized in that** at least one core element is heated.

## Revendications

1. Système formant noyau (10) ayant une section sensiblement rectangulaire et destiné à la fabrication d'un élément composite fibreux, ledit système formant noyau comprenant quatre éléments formant noyau (12, 14, 16, 18) couplés les uns aux autres et pouvant coulisser les uns par rapport aux autres, l'un des quatre éléments formant noyau (12) étant conçu comme un élément formant noyau principal qui a une section transversale sensiblement rectangulaire, et les autres éléments formant noyau (14, 16, 18) ayant une surface inclinée par rapport à une direction de coulissement (V), les quatre éléments formant noyau (12, 14, 16, 18) comportant chacun au moins une surface extérieure (42, 44, 46, 48) qui fait partie d'une surface d'enveloppe (40) de tout le système formant noyau (10), les quatre éléments formant noyau (12, 14, 16, 18) étant en appui sur un élément formant noyau adjacent (12, 14, 16, 18) à chaque fois par le biais de deux surfaces de contact, la surface en coupe transversale du système formant noyau pouvant être modifiée par coulissement des éléments formant noyau.

2. Système formant noyau (10) selon la revendication 1, **caractérisé en ce qu'**au moins un élément formant noyau (14, 16, 18) a une section transversale sensiblement décroissante.

3. Système formant noyau (10) selon la revendication 1 ou 2, **caractérisé en ce que** la surface de contact et la surface extérieure (42, 44, 46, 48) d'au moins un élément formant noyau (14, 16, 18) s'étendent obliquement l'une par rapport à l'autre.

4. Système formant noyau (10) selon l'une des revendications précédentes, **caractérisé en ce que** les éléments formant noyau (12, 14, 16, 18) sont formés à partir d'une matière solide, notamment d'un métal.

5. Utilisation du système formant noyau (10) selon l'une des revendications précédentes comme noyau dans la fabrication d'un composant composite fibreux.

6. Procédé de fabrication d'un composant composite fibreux, à l'aide d'un système formant noyau (10) comprenant au moins deux éléments formant noyau (12, 14, 16, 18) qui sont couplés l'un à l'autre et qui peuvent coulisser l'un par rapport à l'autre, au moins un élément formant noyau (14, 16, 18) ayant une surface inclinée par rapport à une direction de coulissement (V), ledit procédé comprenant les étapes suivantes :
a) faire coulisser un élément formant noyau (12, 14, 16, 18) par rapport à un autre élément formant noyau (12, 14, 16, 18) suivant une direction de coulissement (V),
b) tresser des fibres autour du système formant noyau (10),
c) introduire une matière formant matrice,
d) faire durcir la matière formant matrice, et
e) retirer le système formant noyau (10),
les éléments formant noyau (12, 14, 16, 18) étant déplacés par coulissement les uns par rapport aux autres pendant l'étape c) et/ou l'étape d).

7. Procédé selon la revendication 6, **caractérisé en ce que** les éléments formant noyau sont déplacés par coulissement les uns par rapport aux autres avant l'étape e).

8. Procédé selon l'une des revendications 6 à 7, **caractérisé en ce qu'**au moins un élément formant noyau est chauffé.
